# EUROPÄISCHE PATENTSCHRIFT

(11) **EP 2 384 382 B1**
(45) Veröffentlichungstag und Bekanntmachung des Hinweises auf die Patenterteilung: **30.09.2015**
(21) Anmeldenummer: 09805917.3
(22) Anmeldetag: 10.12.2009
(51) Int. Cl.: E03C 1/086

(54) **DURCHFLUSSMENGENREGLER**
FLOW QUANTITY REGULATOR
RÉGULATEUR DE DÉBIT

(30) Priorität: 30.12.2008 DE 202008017031 U
(43) Veröffentlichungstag der Anmeldung: 09.11.2011
(73) Patentinhaber: Neoperl GmbH, 79379 Müllheim (DE)
(72) Erfinder: WILDFANG, Fabian, 79397 Müllheim (DE)
(74) Vertreter: Kunst, Manuel Nikolaus Johannes
(86) Internationale Anmeldenummer: PCT/EP2009/008814
(87) Internationale Veröffentlichungsnummer: WO 2010/075943

(56) Entgegenhaltungen:
- EP-A1- 0 733 748
- EP-A2- 1 043 452
- US-A- 3 630 444
- US-A- 3 700 001
- US-A- 3 847 178

## Beschreibung

Die Erfindung betrifft einen Durchflussmengenregler mit zumindest einem Drosselkörper aus elastisch verformbarem Material, der im Durchströmkanal eines Reglergehäuses angeordnet ist und zwischen sich und einer, an einer innen- und/oder außenumfangsseitigen Kanalwandung vorgesehenen Regelprofilierung einen Steuerspalt begrenzt, welcher Steuerspalt in seinem lichten Durchflussquerschnitt infolge des sich unter dem Druck des durchströmenden Mediums verformbaren Drosselkörpers veränderbar ist, wobei das Reglergehäuse außenumfangsseitig einen Einspannrandbereich trägt zum Einspannen des Durchflussmengenreglers zwischen zwei miteinander verbundenen Leitungsabschnitten oder Leitungskomponenten.

Durchflussmengenregler sind zum Einsetzen in sanitäre Wasserleitungen bestimmt, um die aus diesen Wasserleitungen entnehmbare Wassermenge unabhängig vom Wasserdruck auf einen Maximalwert festzulegen. Solche Durchflussmengenregler sind bereits in verschiedenen Ausführungen bekannt.

So sind aus der DE 20 2007 008 808 U1 und der DE 26 23 191 A1 bereits Durchflussmengenregler bekannt, die zur Wassereinsparung bei Duschen bestimmt sind. Die vorbekannten Durchflussmengenregler weisen ein Gehäuse auf, das an seinen Stirnendbereichen jeweils ein Anschlussgewinde trägt. Mit Hilfe der an den Stirnendbereichen vorgesehenen Anschlussgewinde kann das Reglergehäuse dieser vorbekannten Durchflussmengenregler in die zu einem Brausekopf führende Wasserleitung zwischengeschaltet werden. Die vorbekannten Durchflussmengenregler lassen sich auch nachträglich noch in eine Wasserleitung montieren; nachteilig ist jedoch, dass das Reglergehäuse dieser vorbekannten Durchflussmengenregler durch die, an die vorhandenen Leitungsabschnitte nicht angepasste Gestalt und Farbe deutlich erkennbar bleiben und somit das äußere Erscheinungsbild der Armatur beeinträchtigen können.

Auch hat man einen Durchflussmengenregler mit einem ringförmigen Drosselkörper aus elastisch verformbarem Material geschaffen, der im Durchströmkanal eines Reglergehäuses angeordnet ist und zwischen sich und einer Regelprofilierung einen Steuerspalt begrenzt, welcher Steuerspalt in seinem lichten Durchflussquerschnitt infolge des sich unter dem Druck des durchströmenden Mediums verformbaren Drosselkörpers veränderbar ist. Um diesen vorbekannten Durchflussmengenregler in der Wasserleitung fixieren und beispielsweise zwischen zwei Rohrleitungsfittings oder zwischen einem Wasserschlauch oder einer Handbrause einspannen zu können, ist am Außenumfang des Reglergehäuses ein Ringflansch vorgesehen, der dem vorbekannten Durchflussmengenregler als Einspannrandbereich dient.

Um den vorbekannten Durchflussmengenregler mit seinem an das Reglergehäuse einstückig angeformten Einspannrandbereich dicht in eine Wasserleitung einbauen zu können, sind auf beiden Seiten des vorbekannten Durchflussmengenreglers noch entsprechende Gummidichtungen vorzusehen. Da der Einspannrandbereich und die beidseits vorgesehenen Gummidichtungen einen nicht unerheblichen Platz erfordern, ist ein nachträglicher Einbau des vorbekannten Durchflussmengenreglers nicht immer möglich. Darüber hinaus wird der Einbau des vorbekannten Durchflussmengenreglers auch erschwert, wenn der über den Einspannrandbereich vorstehende Teilbereich des Reglergehäuses nicht in den lichten Leitungsquerschnitt passt.

Ein ähnlicher Durchflussmengenregler ist beispielsweise in der US-A-3 847 178 beschrieben, der die Merkmale des Oberbegriffs der Anspruchs 1 aufweist.

Aus der EP-A-1 042 452 kennt man bereits eine Wasserleitung, die im Bereich einer Anschlussverschraubung zwischen zwei aneinander angrenzenden Leitungsabschnitten einen Dichtring hat, an dessen, die Ringöffnung umgrenzenden Innenumfangswandung ein Sieb mit einem umgebördelten Mantelbereich insbesondere reibschlüssig in Stecklage gehalten ist. Da das Sieb den Durchflussquerschnitt im Bereich der Anschlussverschraubung nicht wesentlich verengt, setzt das Sieb dem durchströmenden Wasser keinen wesentlichen hydraulischen Widerstand entgegen. Da das Sieb keinen wesentlichen hydraulischen Widerstand darstellt, ist eine reibschlüssige Befestigung des Siebes in Stecklage am Innenumfang des Dichtringes ausreichend. Da aber demgegenüber bei Durchflussmengenreglern regelmäßig ein wesentlich höherer hydraulischer Widerstand auftritt, würde sich eine derartige reibschlüssige Verbindung irgendwelcher Bestandteile des Durchflussmengenreglers unter dem Druck des durchströmenden Wassers sofort lösen.

Es besteht daher insbesondere die Aufgabe, einen Durchflussmengenregler zu schaffen, der auch unter beengten Platzverhältnissen leicht in eine sanitäre Gas- oder Wasserleitung eingebaut und insbesondere auch nachgerüstet werden kann.

Die erfindungsgemäße Lösung dieser Aufgabe besteht insbesondere darin, dass der Durchflussmengenregler einen Dichtring aufweist, dass das Reglergehäuse in der Ringöffnung der Dichtringes angeordnet ist, dass das Reglergehäuse in der Ringöffnung des Dichtringes lösbar verrastbar ist, dass an dem die Ringöffnung begrenzenden Ringinnenumfang dazu zumindest eine Rastnut oder dergleichen Rastmittel vorgesehen ist, das mit wenigstens einem Rastvorsprung oder dergleichen Gegenrastmittel am Gehäuseaußenumfang des Reglergehäuses lösbar verrastbar ist, und dass die zu- und abströmseitige Stirnfläche des Dichtringes den Einspannrandbereich bilden.

Das Reglergehäuse des erfindungsgemäßen Durchflussmengenreglers ist somit in der Ringöffnung des Dichtringes angeordnet, dessen zu- und abströmseitige Stirnfläche den Einspannrandbereich bilden. Der erfindungsgemäße Durchflussmengenregler kann daher wie ein Dichtring in die Leitungsanschlüsse von zwei miteinander verbundenen Leitungsabschnitten eingesetzt werden, ohne dass zusätzliche Dichtringe erforderlich sind. Im Falle einer Nachrüstung kann der Durchflussmengenregler an einer solchen Stelle platziert werden, an der bisher eine Dichtung platziert war, wobei der erfindungsgemäße Durchflussmengenregler diese Dichtung dann auch ersetzen kann.

Das Reglergehäuse wird auch bei hohen Wasserdrücken sicher und fest im Dichtring gehalten, wenn das Reglergehäuse von der

Zuström- oder der Abströmseite bis zu einem radial nach innen vorstehenden Absatz des Dichtringes in dessen Ringöffnung einsetzbar ist.

Damit das Reglergehäuse nicht störend über den Dichtring vorsteht und damit der erfindungsgemäße Durchflussmengenregler unabhängig von den Einbauverhältnissen möglichst vielseitig eingesetzt werden kann, ist es vorteilhaft, wenn das Reglergehäuse in der Ringöffnung des Dichtringes versenkbar ist. Bei dieser Ausführungsform steht das Reglergehäuse auf beiden Seiten des Dichtringes nicht störend über den Dichtring vor.

Der erfindungsgemäße Durchflussmengenregler lässt sich auf einfache Weise beispielsweise in der Überwurfmutter einer Rohrleitungskupplung einsetzen und sichern, wenn am Außenumfang des Dichtrings zumindest eine Haltenocke oder ein Haltevorsprung vorsteht, der in das Innengewinde eines Leitungs-Kupplungsteiles eingreift. Die Überwurfmutter eines Brauseschlauches, die entweder Armaturen-anschlussseitig oder am Übergang zur Handbrause vorgesehen sein kann, stellt einen typischen Anwendungsfall dar.

Dabei wird der sichere Halt des erfindungsgemäßen Durchflussmengereglers in einem solchen Leitungs-Kupplungsteil noch zusätzlich begünstigt, wenn mehrere, vorzugsweise gleichmäßig über den Ring-Außenumfang des Dichtringes angeordnete Haltevorsprünge vorgesehen sind.

Um stets die ordnungsgemäße Funktionsweise des erfindungsgemäßen Durchflussmengenreglers sicherzustellen, ist es vorteilhaft, wenn dem Durchflussmengenregler ein Vorsatzsieb zuströmseitig vorgeschaltet ist, das allenfalls nur mit einem in Zuströmrichtung sich vorzugsweise konisch verjüngenden Zentralbereich über die Außenkontur von Reglergehäuse und Dichtring vorsteht. Das sich in einen Zentralbereich in Zuströmrichtung vorzugsweise konisch verjüngende Vorsatzsieb vermag die im Medium mitgeführten Schmutzpartikel auszufiltern, die sich aufgrund der besonderen Formgebung des Vorsatzsiebes am äußeren Siebrand absetzen. Auch ein solches, sich konisch verjüngendes Vorsatzsieb steht nicht störend in dem lichten Leitungsquerschnitt der benachbarten Rohrleitung vor, da der spitz zulaufende, freie Endbereich des sich konisch verjüngenden Vorsatzsiebes in dem über dem Dichtring vorstehenden Umfangsbereich ausreichend klein gehalten werden kann.

Weitere Merkmale gemäß der Erfindung ergeben sich aus der nachfolgenden Figurenbeschreibung in Verbindung mit den Ansprüchen. Nachstehend wird ein bevorzugtes Ausführungsbeispiel anhand der Zeichnung noch näher erläutert. Dabei gehören die Figuren 16 bis 18 nicht zu der Erfindung.

Es zeigt:
- Fig. 1: einen, in einem Längsschnitt dargestellten Durchflussmengenregler, der in der Ringöffnung eines außenumfangsseitig vorgesehenen Dichtringes angeordnet ist,
- Fig. 2: den Durchflussmengenregler aus Figur 1 in einer Draufsicht auf seine Zuströmseite,
- Fig. 3: den Durchflussmengenregler aus Figur 1 und 2 in einer Seitenansicht,
- Fig. 4: den Durchflussmengenregler aus Figur 1 bis 3 in einer gegenüber Figur 3 leicht verdrehten Seitenansicht,
- Fig. 5: den Durchflussmengenregler aus Figur 1 bis 4 in einer perspektivischen Draufsicht auf seine Auslaufstirnseite,
- Fig. 6: den Durchflussmengenregler aus Figur 1 bis 5 in einer Draufsicht auf seine Auslaufstirnseite,
- Fig. 7: eine sanitäre Auslaufarmatur, die über einen flexiblen Brauseschlauch mit einer Handbrause verbunden ist, wobei die für den Durchflussmengenregler gemäß den Figuren 1 bis 6 bevorzugten Einbaualternativen durch einen Kreis umgrenzt und mit A und B gekennzeichnet sind,
- Fig. 8: den Durchflussmengenregler aus den Figuren 1 bis 6 im Einbaubereich A gemäß Figur 7,
- Fig. 9: den Durchflussmengenregler aus den Figuren 1 bis 6 im Einbaubereich B gemäß Figur 7,
- Fig. 10: einen, in einem Längsschnitt durch Schnittebene X-X in Fig. 11 dargestellten Durchflussmengenregler, der - ähnlich wie in den Figuren 1 bis 6 - in der Ringöffnung eines außenumfangsseitig vorgesehenen Dichtringes angeordnet ist, wobei der hier gezeigte Durchflussmengenregler kein zuströmseitiges Vorsatzsieb hat und sich durch eine besonders flache Außenkontur auszeichnet,
- Fig. 11: den Durchflussmengenregler aus Fig. 10 in einer Draufsicht auf seine Zuströmseite,
- Fig. 12: den Durchflussmengenregler aus Fig. 10 und 11 in einer Seitenansicht,
- Fig. 13: den Durchflussmengenregler aus Fig. 10 bis 12 in einer perspektivischen Draufsicht auf seine Auslaufstirnseite,
- Fig. 14: den Durchflussmengenregler aus Fig. 10 bis 13 in einer gegenüber Fig. 13 gedrehten Seitenansicht,
- Fig. 15: den Durchflussmengenregler aus Fig. 10 bis 14 in einer Draufsicht auf seine Auslaüfstirnseite,
- Fig. 16: einen in einem Längsschnitt durch Schnittebene XVI-XVI in Fig. 18 gezeigten Durchflussmengenregler, bei dem das Reglergehäuse außenseitig einen als Umspritzung des Reglergehäuses ausgestalteten Dichtring trägt, wobei auch hier der Durchflussmengenregler ohne ein zuströmseitiges Vorsatzsieb auskommt,
- Fig. 17: den im Bereich seines Dichtringes teilweise aufgeschnittenen Durchflussmengenregler aus Fig. 16 in einer perspektivischen Draufsicht auf seine Zuströmseite,
- Fig. 18: den Durchflussmengenregler aus Fig. 16 und 17 in einer Draufsicht auf seine Auslaufstirnseite,
- Fig. 19: einen mit Fig. 1 bis 6 vergleichbaren Durchflussmengenregler in einem Längsschnitt durch Schnittebene XIX-XIX in Fig. 20,
- Fig. 20: den Durchflussmengenregler aus Fig. 19 in einem vergrößerten Teil-Längsschnitt im Bereich eines Steuerspalts, der zwischen einem elastischen Drosselkörper und einer an der außenumfangsseitigen Kanalwandung befindlichen Regelprofilierung vorgesehen ist,
- Fig. 21: den Durchflussmengenregler aus Fig. 19 und 20 in einem perspektivischem Teil-Längsschnitt,
- Fig. 22: den Durchflussmengenregler aus Fig. 19 bis 21 in einer Draufsicht auf seine Zuströmseite, wobei vor allem das den Durchflussmengenregler zuströmseitig vorgeschaltete und mit ihm lösbar verbundene Vorsatzsieb zu erkennen ist,
- Fig. 23: den Durchflussmengenregler aus Fig. 19 bis 22 in einer Draufsicht auf seine Auslaufstirnseite,
- Fig. 24: den Durchflussmengenregler aus Fig. 19 bis 23 in einer Seitenansicht,
- Fig. 25: einen mit Fig. 10 bis 15 vergleichbaren Durchflussmengenregler in einem Längsschnitt durch Schnittebene XXV-XXV in Fig. 26,
- Fig. 26: den Durchflussmengenregler aus Fig. 25 in einer Draufsicht auf seine Auslaufstirnseite,
- Fig. 27: den Durchflussmengenregler aus Fig. 25 und 26 in einer Seitenansicht,
- Fig. 28: den Durchflussmengenregler aus Fig. 25 bis 27 in einer in Umfangsrichtung gedrehten Seitenansicht,
- Fig. 29: den Durchflussmengenregler aus Fig. 25 bis 28 in einer Draufsicht auf seine Auslaufstirnseite,
- Fig. 30: den Durchflussmengenregler aus Fig. 25 bis 29 in einer perspektivischen Draufsicht auf seine Auslaufstirnseite,
- Fig. 31: den Durchflussmengenregler aus Fig. 19 bis 24 in einem teilweise längs geschnittenen Anwendungsbeispiel, in welchem der Durchflussmengenregler in ein Kugelgelenk-Wasserauslauf eingesetzt ist,
- Fig. 32: das Anwendungsbeispiel aus Fig. 31 in einer perspektivischen Seitenansicht,
- Fig. 33: das Anwendungsbeispiel aus Fig. 31 und 32 in einer Draufsicht auf die Zuströmseite des in den Kugelgelenk-Wasserauslauf eingesetzten Durchflussmengenreglers,
- Fig. 34: ein, in einer perspektivischen Ansicht gezeigtes Anwendungsbeispiel, in welchem der in den Fig. 25 bis 30 gezeigte Durchflussmengenregler in ein wandseitiges Eckventil eingesetzt ist, und
- Fig. 35: das in einer Seitenansicht abgebildete Eckventil des in Fig. 34 gezeigten Anwendungsbeispieles, wobei das Eckventil im Bereich A aus Fig. 34 aufgeschnitten dargestellt ist.

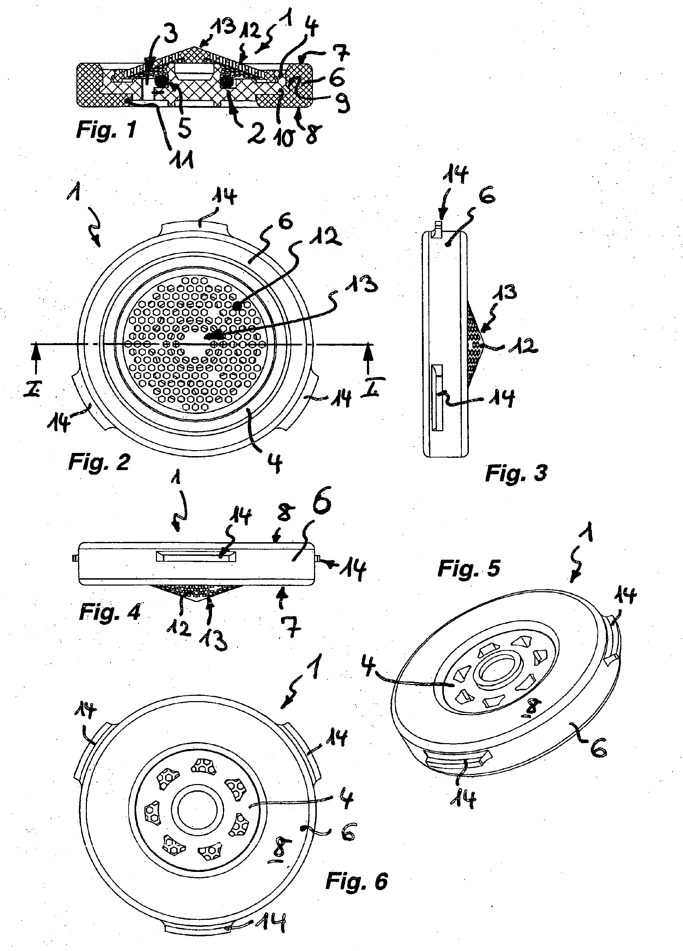

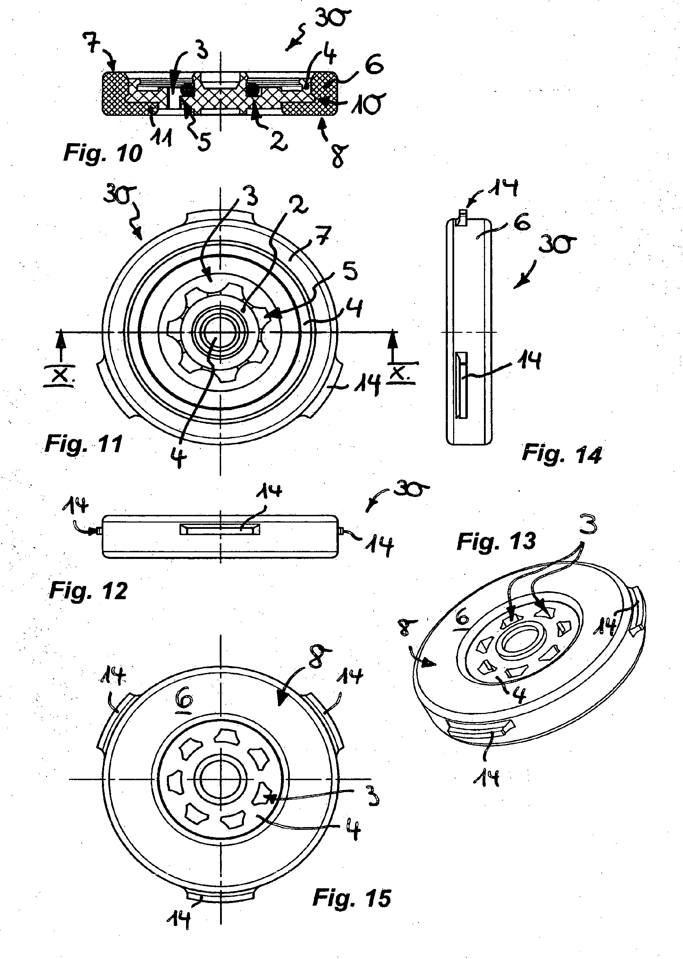

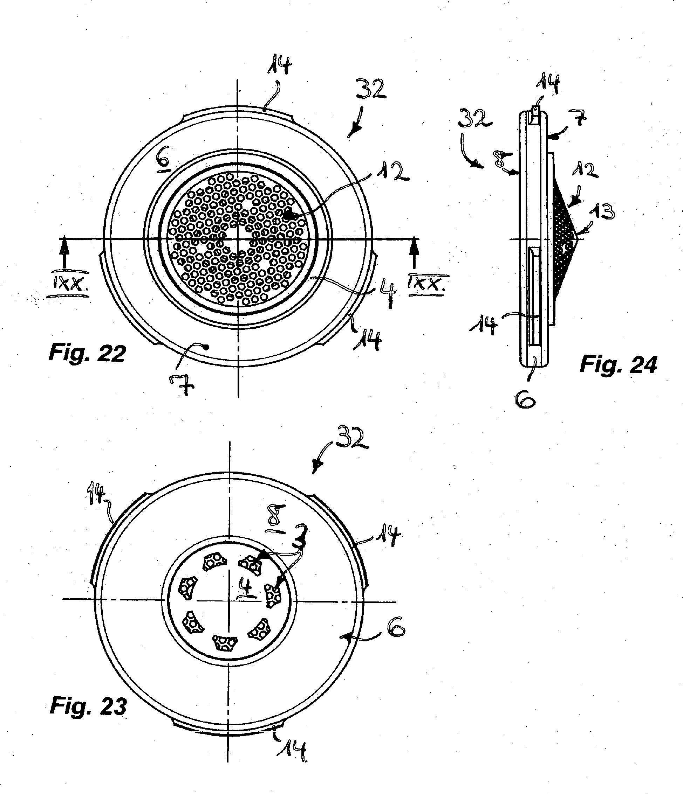

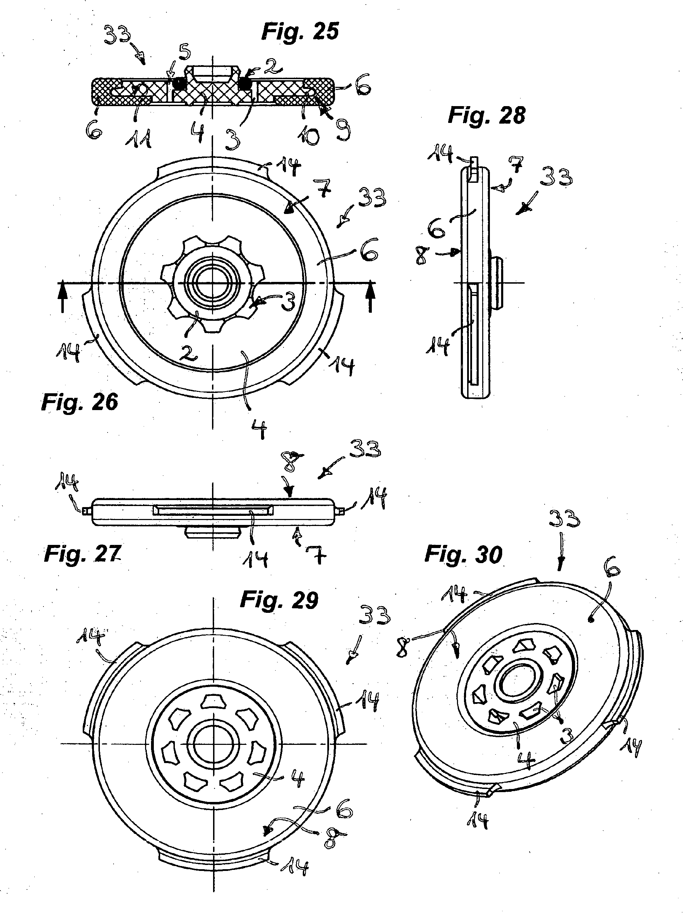

In den Figuren 1 bis 6, 8 bis 33 und 35 ist ein Durchflüssmengenregler 1, 30, 31, 32 und 33 mit einem ringförmigen Drosselkörper 2 aus elastisch verformbaren Material dargestellt, welcher Drosselkörper 2 im Durchströmkanal 3 eines Reglergehäuses 4 angeordnet ist. Der Drosselkörper 2 begrenzt zwischen sich und einer, an einer innen- oder außenumfangsseitigen Kanalwandung vorgesehenen Regelprofilierung einen Steuerspalt 5, welcher Steuerspalt 5 in seinem lichten Durchflussquerschnitt infolge des sich unter dem Druck des durchströmendem Mediums verformbaren Drosselkörpers 2 veränderbar ist. Da sich der aus elastisch verformbaren Material bestehende Drosselkörper 2 unter dem Druck des zuströmenden Wassers verformt und da dadurch der Steuerspalt 5 mit steigendem Druck des zuströmenden Wassers zunehmend verengt, kann das pro Zeiteinheit durchströmende Volumen des den Durchströmkanal 3 passierenden Mediums auf einen Maximalwert festgelegt werden..

Wie in den Figuren 1 bis 6, 8 bis 33 und 35 zu erkennen ist, weist das Reglergehäuse 4 des Durchflussmengenreglers 1, 30, 31, 32 und 33 außenumfangsseitig einen Einspannrandbereich auf, der zum Einspannen des Durchflussmengenreglers 1 zwischen zwei miteinander verbundenen Leitungsabschnitten oder Leitungskomponenten einer sanitären Versorgungsleitung vorgesehen ist. Dabei ist in den Figuren 1, 10, 16, 19, 21, 28, 31 und 35 besonders gut zu erkennen, dass das Reglergehäuse 4 in der Ringöffnung eines Dichtringes 6 angeordnet ist, dessen zu- und abströmseitige Stirnfläche 7, 8 den Einspannrandbereich bilden. Der Durchflussmengenregler 1 lässt sich so beispielsweise in die Überwurfmutter einer Rohrleitungskupplung einsetzen, wobei sein durch den Dichtring 6 gebildeter Einspannrandbereich die einander anliegenden Stirnflächen der aneinander angrenzenden Leitungsabschnitte nach außen hin abdichtet.

Aus den Figuren 1, 10, 19, 21, 28, 31 und 35 ist zu entnehmen, dass das Reglergehäuse 4 der Durchflussmengenregler 1, 30, 32 und 33 in der Ringöffnung des Dichtringes 6 lösbar verrastbar ist. Dazu ist an dem die Ringöffnung begrenzenden Ringinnenumfang des Dichtringes 6 eine umlaufende Rastnut 9 vorgesehen, die mit einem ebenfalls umlaufenden Rastvorsprung 10 am Gehäuseaußenumfang des Reglergehäuses 4 lösbar verrastbar ist.

Das Reglergehäuse 4 ist von der Zuströmseite des Dichtringes 6 aus bis zu einem radial nach innen vorstehenden Absatz 11 in dessen Ringöffnung einsetzbar. Dabei lässt sich das Reglergehäuse 4 praktisch vollständig in der Ringöffnung des Dichtringes 6 versenken, so dass das Reglergehäuse 4 beidseits praktisch nicht mehr über den Dichtring 6 vorsteht.

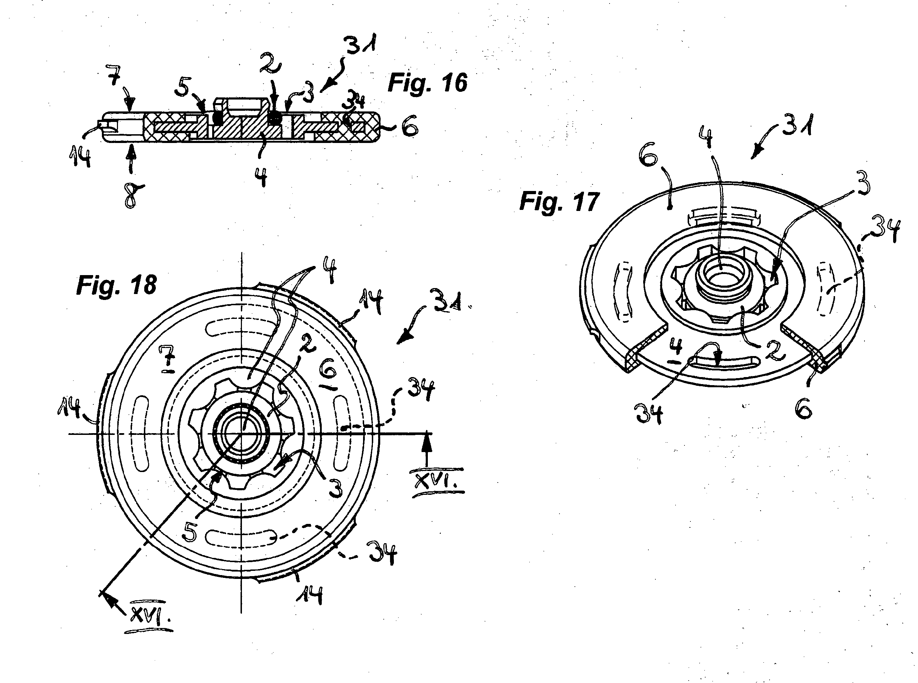

Demgegenüber ist der Dichtring 6 des in den Fig. 16 bis 18 dargestellten nicht erfindungsgemässen Durchflussmengenreglers 31 als Umspritzung des Reglergehäuses 4 ausgestaltet. Dabei weist auch das Reglergehäuse 4 einen außenumfangsseitigen Ringflansch auf, der drei Durchgriffsöffnungen 34 hat. Die in Umfangsrichtung vorzugsweise gleichmäßig voneinander beabstandeten und insbesondere kreisbogenförmig ausgestalteten Durchgriffsöffnungen 34, die mit ihrer Längsachse etwa in Längsrichtung des Durchflussmengenreglers 31 orientiert sind, sind von dem weichelastischen Dichtungsmaterial des Dichtringes 6 durchsetzt. Auf diese Weise lassen sich der Dichtring 6 und das Reglergehäuse 4 des vorzugsweise als Zweikomponenten- oder Mehrkomponenten-Spritzgussteil hergestellten Durchflussmengenreglers 31 auf einfache Weise fest und unlösbar miteinander verbinden.

Um stets die Funktionssicherheit des erfindungsgemäßen Durchflussmengenreglers zu gewährleisten und um die in der sanitären Versorgungsleitung eventuell mitgeführten Schmutzpartikel ausfiltern zu können, ist es vorteilhaft, wenn dem Durchflussmengenregler 1, 32 ein Vorsatzsieb 12 zuströmseitig vorgeschaltet ist, dass allenfalls nur mit einem in Zuströmrichtung sich konisch verjüngenden Zentralbereich 13 über die Außenkontur von Reglergehäuse 4 und Dichtring 6 vorsteht.

Demgegenüber ist bei dem Durchflussmengenregler 30, 31 und 33 kein Vorsatzsieb vorgesehen, so dass sich diese Durchflussmengenregler 30, 31 und 33 durch ihre besonders flache Einbauhöhe auszeichnet.

Aus den Fig. 2 bis 6, 11 bis 15, 17 bis 18, 19, 21 bis 24 und 26 bis 30 wird deutlich, dass am Außenumfang des Dichtrings 6 mehrere Haltenocken oder dergleichen Haltevorsprünge 14 vorstehen, die in das Innengewinde eines beispielsweise als Überwurfmutter ausgebildeten Leitungs-Kupplungsteiles eingreifen. Dabei sieht der hier dargestellte Durchflussmengenregler 1 mehrere, vorzugsweise gleichmäßig über den Ring-Außenumfang des Dichtringes 6 angeordnete Haltevorsprünge 14 vor.

In den hier dargestellten Durchflussmengenregler 1, 30, 31, 32, 33 ist mit dem Dichtring 6 eine Ringdichtung integriert. Dabei zeichnet sich der Durchflussmengenregler 1, 30, 31, 32, 33 durch eine vergleichsweise geringe Bauhöhe aus, die den Einbau des Durchflussmengenreglers 1, 30, 31, 32, 33 in nahezu jeder Einbausituation erlaubt. Die am Außenumfang des Dichtringes 6 vorgesehenen Vorsprünge 14 können sich in Verbindung mit der Elastizität des für den Dichtring 6 und seine Haltevorsprünge 14 verwendeten Materials derart sicher und fest in das entsprechende Leitungs-Kupplungsteil einformen, dass der Durchflussmengenregler 1, 30, 31, 32, 33 auch in vormontiertem Zustand des betreffenden Leitungsabschnittes darin praktisch unverlierbar gehalten ist. Obwohl für den hier dargestellten Durchflussmengenregler 1, 30, 31, 32, 33 keine weiteren Dichtungen erforderlich sind, vermag der Durchflussmengenregler die einander zugewandten Stirnseiten der miteinander zu verbindenden Leitungsabschnitte nach außen hin abzudichten. Obwohl, der Durchflussmengenregler 1, 30, 31, 32, 33 das Reglergehäuse 4 und den Dichtring 6 einerseits und den Durchflussmengenregler in einer vormontierten Stellung andererseits verliersicher zu halten vermag, können mit demselben Dichtring 6 in Verbindung mit anderen Durchflussmengenreglern auch andere Durchflussklassen realisiert werden. Dabei lässt sich der hier dargestellte Durchflussmengenregler 1, 30, 31, 32, 33 beispielsweise auch in dem an eine Handbrause oder in dem an einen Brauseschlauch vorgesehenen Leitungs-Kupplungsteil unterbringen.

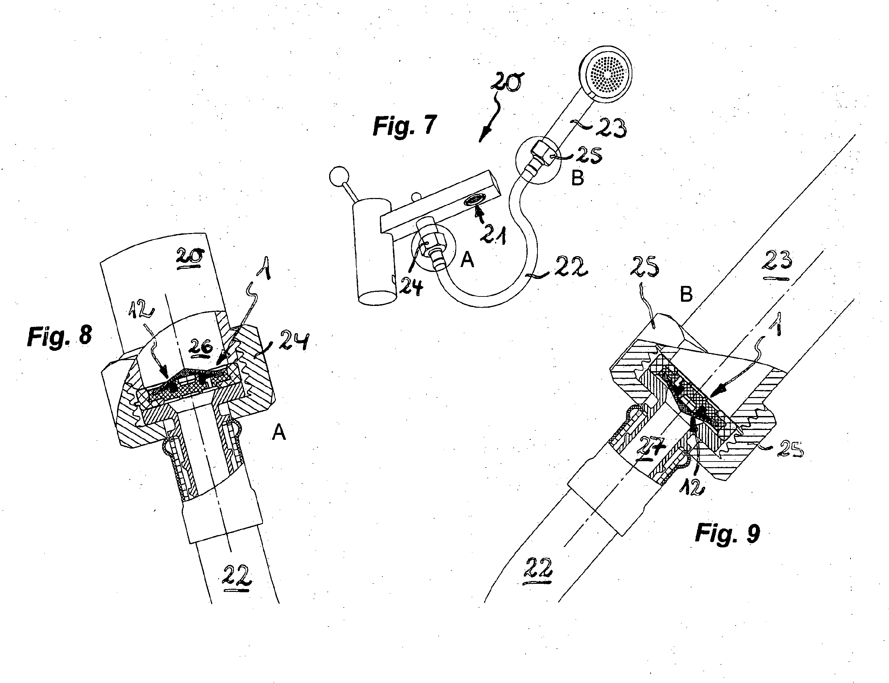

In den Figuren 7 bis 9 sind typische Anwendungsfälle für den in den Figuren 1 bis 6 dargestellten Durchflussmengenregler 1 gezeigt. Dabei ist in Figur 7 eine sanitäre Auslaufarmatur 20 dargestellt, die beispielsweise im Bereich einer Badewanne angeordnet werden kann. Die sanitäre Auslaufarmatur 20 hat einerseits einen Wasserauslauf 21 und ist andererseits auch über einen flexiblen Brauseschlauch 22 mit einer Handbrause 23 verbunden. Um die zur Handbrause 23 strömende Wassermenge auf ein maximales Volumen pro Zeiteinheit zu begrenzen, kann der Durchflussmengenregler 1 beispielsweise in der an der Auslaufarmatur 20 montierbaren Überwurfmutter 24 des Brauseschlauches 22 in Einbausituation A gemäß Figur 8 oder in der am Übergang zur Handbrause 23 vorgesehenen Überwurfmutter 25 in Einbausituation B gemäß Figur 9 angeordnet sein. Es ist ein besonderer Vorteil des hier dargestellten Durchflussmengenreglers 1, dass dieser auch in unterschiedlichen Einbausituationen ohne weiteres so eingesetzt werden kann, dass das Vorsatzsieb 12 funktionsgerecht stets auf der Zuströmseite des Durchflussmengenreglers 1 angeordnet ist und es entweder in den lichten Rohrquerschnitt 26 der Auslaufarmatur 20 oder in den lichten Schlauchquerschnitt 27 des flexiblen Brauseschlauches 22 vorsteht.

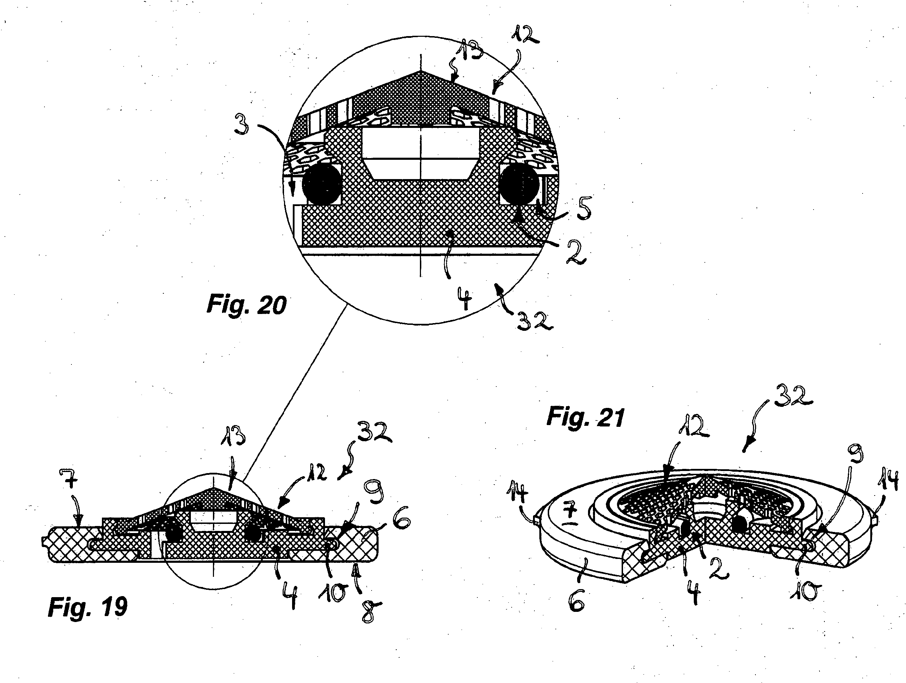

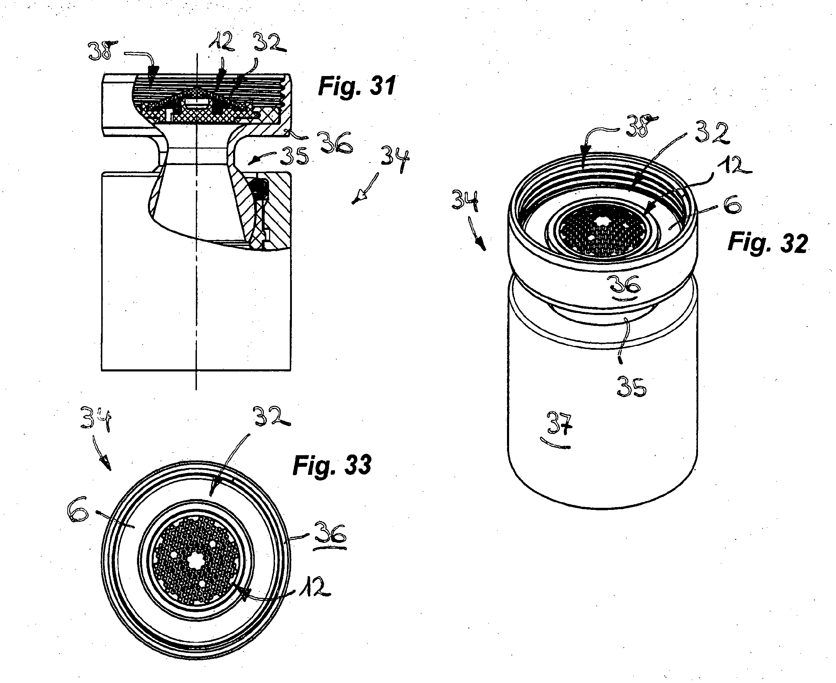

In den Fig. 31 bis 33 ist ein weiteres Ausführungsbeispiel gezeigt, bei dem der Durchflussmengenregler 32 aus den Fig. 19 bis 24 in einem Kugelgelenk-Wasserauslauf 34 einsetzbar ist. Der Kugelgelenk-Wasserauslauf 34 weist zwei, über ein Kugelgelenk 35 gelenkig miteinander verbundene Gelenkteile 36, 37 auf, von denen das zuströmseitige Gelenkteil 36 eine Gewindeöffnung 38 mit einem Innengewinde hat, das an dem Außengewinde am Auslaufende einer sanitären Auslaufarmatur verschraubt werden kann. Aus dem Teil-Längsschnitt in Fig. 31 ist erkennbar, dass der Durchflussmengenregler 32 gegebenenfalls auch nachträglich noch gegen den Dichtring ausgetauscht und in die Gewindeöffnung 38 eingesetzt werden kann. Aufgrund der geringen Einbauhöhe des Durchflussmengenreglers 32 ist dieser in die Gewindeöffnung 38 einsetzbar, ohne dass dies von außen irgendwie erkennbar wäre. Der mit dem Durchflussmengenregler 32 ausgestattete Kugelgelenk-Wasserauslauf 34 bildet somit eine funktional hoch verdichtete Einheit, die auf kleinstem Raum die Funktionen einer Dichtung, eines Vorsatzsiebes, eines Mengereglers und eines Kugelgelenk-Auslaufs miteinander kombiniert. Dabei ist diese hoch verdichtete Einheit auch nachträglich noch an einer vorhandenen sanitären Auslaufarmatur befestigbar.

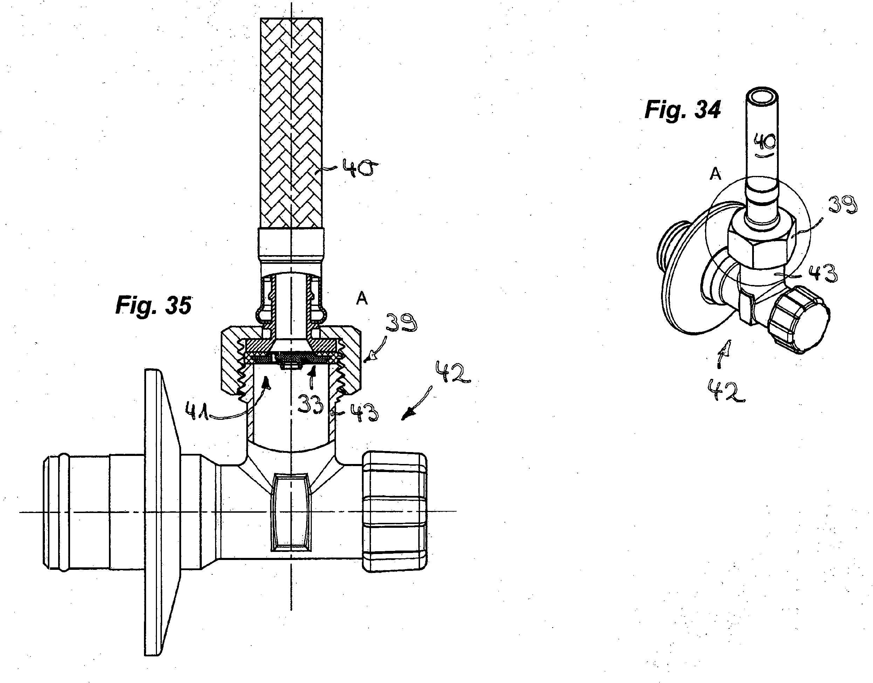

In den Fig. 34 und 35 ist ein weiteres Ausführungsbeispiel dargestellt, bei dem der Durchflussmengenregler 33 in den Schlauchanschluss 39 eines Wasserschlauches 40 eingesetzt ist. Dieser Schlauchanschluss 39 weist eine Gewindeöffnung 41 mit einem Innengewinde auf, mit welchem Innengewinde der Schlauchanschluss 39 am Außengewinde eines Eckventiles 42 verschraubt ist. Dabei ersetzt auch der in die Gewindeöffnung 41 des Schlauchanschlusses 39 eingesetzte Durchflussmengenregler 33 einen Dichtring, der ansonsten üblicherweise an gleicher Stelle zwischen den Schlauchanschluss 39 und den das Außengewinde aufweisenden Gewindestutzen 43 des Eckventiles 42 eingespannt ist.

Die hier dargestellten Durchflussmengenregler lassen sich auch unter beengten Platzverhältnissen leicht in eine sanitäre Wasserleitung einbauen, wobei die Durchflussmengenregler mit ihren durch den Dichtring 6 gebildeten Einspannrandbereich auch die einander angrenzenden Stirnseiten der miteinander zu verbindenden Leitungsabschnitte nach außen hin abdichten.

Das Reglergehäuse 4 kann beispielsweise aus einem thermoplastischen Kunststoff und der Dichtring 6 aus einem Elastomer, einem thermoplastischen Elastomer oder einem weichen Thermoplast hergestellt werden. Sofern hier von einem Mehrkomponenten-Spritzgussteil gesprochen wird, werden darunter nicht nur solche Spritzgussvorgänge, die in unmittelbarer zeitlicher Abfolge und/oder in beispielsweise einem einzigen Spritzgusswerkzeug erfolgen, angesprochen, vielmehr sind darunter auch solche Spritzgussvorgänge gemeint, bei denen zur Herstellung des Spritzgussteiles mehrere Komponenten in verschiedenen Werkzeugen, gegebenenfalls auch im größeren zeitlichen Abstand, miteinander zu einem Spritzgussteil geformt oder umformt werden.

## Patentansprüche

1. Durchflussmengenregler (1, 30, 31, 32, 33) mit zumindest einem Drosselkörper (2) aus elastisch verformbaren Material, mit einem Reglergehäuse (4), wobei der Drosselkörper (2) im Durchströmkanal (3) des Reglergehäuses (4) angeordnet ist und zwischen sich und einer, an einer innen- und/oder außenumfangsseitigen Kanalwandung vorgesehenen Regelprofilierung einen Steuerspalt (5) begrenzt, welcher Steuerspalt (5) in seinem lichten Durchflussquerschnitt infolge des sich unter dem Druck des durchströmenden Mediums verformbaren Drosselkörpers (2) veränderbar ist, wobei das Reglergehäuse (4) außenumfangsseitig einen Einspannrandbereich trägt zum Einspannen des Durchflussmengenreglers (1, 30, 31, 32, 33) zwischen zwei miteinander verbundenen Leitungsabschnitten oder Leitungskomponenten, **dadurch gekennzeichnet, dass** der Durchflussmengenregler (1, 30, 31, 32, 33) einen Pichtring (6) aufweist, dass das Reglergehäuse (4) in der Ringöffnung des Dichtringes (6) angeordnet ist, dass das Reglergehäuse (4) in der Ringöffnung des Dichtringes (6) lösbar verrastbar ist, dass an dem die Ringöffnung begrenzenden Ringinnenumfang dazu zumindest eine Rastnut (9) oder dergleichen Rastmittel vorgesehen ist, das (9) mit wenigstens einem Rastvorsprung (10) oder dergleichen Gegenrastmittel am Gehäuseaußenumfang des Reglergehäuses (4) lösbar verrastbar ist, und dass die zu- und abströmseitige Stirnfläche (7, 8) des Dichtringes (6) den Einspannrandbereich bilden.

2. Durchflussmengenregler nach Anspruch 1, **dadurch gekennzeichnet, dass** das Reglergehäuse (4) und der mit ihm verbundene Dichtring (6) als Mehrkomponenten-Spritzgussteil ausgestaltet sind.

3. Durchflussmengenregler nach Anspruch 1 oder 2, **dadurch gekennzeichnet, dass** das Reglergehäuse (4) zumindest eine, vorzugsweise in Längsrichtung orientierte Durchgriffsöffnung (34) hat, die von dem Dichtungsmaterial des Dichtrings (6) durchsetzt ist.

4. Durchflussmengenregler nach einem der Ansprüche 1 bis 4, **dadurch gekennzeichnet, dass** das Reglergehäuse (4) von der Zuströmseite oder der Abströmseite bis zu einem radial nach innen vorstehenden Absatz (11) des Dichtringes (6) in dessen Ringöffnung einsetzbar ist.

5. Durchflussmengenregler nach einem der Ansprüche 1 bis 5, **dadurch gekennzeichnet, dass** das Reglergehäuse (4) in der Ringöffnung des Dichtringes (6) versenkbar ist.

6. Durchflussmengenregler nach einem der Ansprüche 1 bis 6, **dadurch gekennzeichnet, dass** am Außenumfang des Dichtringes (6) zumindest eine Haltenocke oder ein Haltevorsprung (14) vorsteht, der in das Innengewinde eines Leitungs-Kupplungsteil eingreift.

7. Durchflussmengenregler nach einem der Ansprüche 1 bis 7, **dadurch gekennzeichnet, dass** mehrere, vorzugsweise gleichmäßig über den Ring-Außenumfang des Dichtrings (6) angeordnete Haltevorsprünge (14) vorgesehen sind.

8. Durchflussmengenregler nach einem der Ansprüche 1 bis 8, **dadurch gekennzeichnet, dass** dem Durchflussmengenregler (1) ein Vorsatzsieb (12) zuströmseitig vorgeschaltet ist, das mit einem in Zuströmrichtung sich vorzugsweise konisch verjüngenden Zentralbereich (13) über die Außenkontur von Reglergehäuse (4) und Dichtring (6) vorsteht.

## Claims

1. Flow volume regulator (1, 30, 31, 32, 33) comprising at least one throttle body (2) consisting of elastically deformable material, comprising a regulator housing (4), wherein the throttle body (2) is arranged in the throughflow duct (3) of the regulator housing (4) and delimits a control gap (5) between itself and a regulating profiling provided on an inner and/or outer circumferential duct wall, a clear throughflow cross section of said control gap (5) can be varied as a result of the throttle body (2) which is deformable under the pressure of the medium flowing therethrough, the regulator housing (4) bearing on an outer circumference thereof a clamping edge region for clamping the flow volume regulator (1, 30, 31, 32, 33) between two line sections or line components which are connected to one another, **characterised in that** the flow volume regulator (1, 30, 31, 32, 33) comprises a sealing ring (6), **in that** the regulator housing (4) is arranged in the ring opening of the sealing ring (6), **in that** the regulator housing (4) can be releasably latched in the ring opening of the sealing ring (6), **in that** at least one latching groove (9) or similar latching means is provided on the ring inner circumference which delimits the ring opening, and said at least one latching groove (9) can be releasably latched by at least one latching projection (10) or similar mating latching means on the outer circumference of the regulator housing (4), and **in that** the end surfaces (7, 8) of the sealing ring (6) on the inflow and outflow sides form the clamping edge region.

2. Flow volume regulator as claimed in claim 1, **characterised in that** the regulator housing (4) and the sealing ring (6) which is connected thereto are formed as a multicomponent injection-moulded part.

3. Flow volume regulator as claimed in claim 1 or 2, **characterised in that** the regulator housing (4) has at least one through-passage opening (34) which is preferably oriented in the longitudinal direction and through which the seal material of the sealing ring (6) extends.

4. The flow volume regulator as claimed in any one of claims 1 to 4, **characterised in that** the regulator housing (4) can be inserted into the ring opening of the sealing ring (6) from the inflow side or the outflow side to a radially inwardly protruding shoulder (11) of said sealing ring.

5. Flow volume regulator as claimed in any one of claims 1 to 5, **characterised in that** the regulator housing (4) can be countersunk in the ring opening of the sealing ring (6).

6. Flow volume regulator as claimed in any one of claims 1 to 6, **characterised in that** at least one retaining cam or retaining protrusion (14), which engages into the internal thread of a line coupling part, protrudes on the outer circumference of the sealing ring (6).

7. Flow volume regulator as claimed in any one of claims 1 to 7, **characterised in that** a plurality of retaining protrusions (14) are provided, preferably arranged uniformly over the outer circumference of the sealing ring (6).

8. Flow volume regulator as claimed in any one of claims 1 to 8, **characterised in that** an attachment screen (12) is connected upstream of the flow volume regulator (1) on the inflow side and protrudes with a central region (13), which tapers preferably conically in the inflow direction, over the outer contour of the regulator housing (4) and the sealing ring (6).

## Revendications

1. Régulateur de débit (1, 30, 31, 32, 33) avec au moins un corps d'étranglement (2) en un matériau déformable élastiquement, avec un boîtier de régulateur (4), dans lequel le corps d'étranglement (2) est disposé dans le canal de passage (3) du boîtier de régulateur (4) et délimite entre lui-même et un profilage de régulation prévu sur une paroi périphérique côté intérieur et/ou côté extérieur du canal une fente de commande (5), fente de commande (5) dont la section transversale de passage libre est variable en raison du corps d'étranglement (2) déformable sous la pression du fluide qui le traverse, dans lequel le boîtier de régulateur (4) porte du côté de la périphérie extérieure une zone de bord de serrage pour le serrage du régulateur de débit (1, 30, 31, 32, 33) entre deux parties de conduite ou deux composants de conduite reliés l'un à l'autre, **caractérisé en ce que** le régulateur de débit (1, 30, 31, 32, 33) présente un joint annulaire (6), **en ce que** le boîtier de régulateur (4) est disposé dans l'ouverture annulaire du joint annulaire (6), **en ce que** le boîtier de régulateur (4) peut être encliqueté de façon séparable dans l'ouverture annulaire du joint annulaire (6), **en ce qu'**il est prévu à cet effet sur la périphérie intérieure annulaire délimitant l'ouverture annulaire au moins une rainure d'encliquetage (9) ou des moyens d'encliquetage analogues, qui (9) peuvent être encliquetés de façon séparable avec au moins une saillie d'encliquetage (10) ou des moyens d'encliquetage conjugués analogues sur la périphérie extérieure de boîtier du boîtier de régulateur (4), et **en ce que** la face frontale (7, 8) côté entrée et côté sortie d'écoulement du joint annulaire (6) forment la zone de bord de serrage.

2. Régulateur de débit selon la revendication 1, **caractérisé en ce que** le boîtier de régulateur (4) et le joint annulaire (6) assemblé à celui-ci sont configurés sous la forme d'une pièce moulée par injection à plusieurs composants.

3. Régulateur de débit selon la revendication 1 ou 2, **caractérisé en ce que** le boîtier de régulateur (4) comporte au moins une ouverture de prise (34) orientée de préférence en direction longitudinale, qui est traversée par le matériau d'étanchéité du joint annulaire (6).

4. Régulateur de débit selon l'une quelconque des revendications 1 à 3, **caractérisé en ce que** le boîtier de régulateur (4) peut être inséré à partir du côté d'entrée ou du côté de sortie d'écoulement jusqu'à un épaulement (11) saillant radialement vers l'intérieur du joint annulaire (6) dans l'ouverture annulaire de celui-ci.

5. Régulateur de débit selon l'une quelconque des revendications 1 à 4, **caractérisé en ce que** le boîtier de régulateur (4) peut être enfoncé dans l'ouverture annulaire du joint annulaire (6).

6. Régulateur de débit selon l'une quelconque des revendications 1 à 5, **caractérisé en ce qu'**une came de retenue ou une saillie de retenue (14) est saillante sur la périphérie extérieure du joint annulaire (6) et s'engage dans le filet intérieur d'une pièce de couplage de conduite.

7. Régulateur de débit selon l'une quelconque des revendications 1 à 6, **caractérisé en ce qu'**il est prévu plusieurs saillies de retenue (14) disposées de préférence uniformément sur la périphérie extérieure annulaire du joint annulaire (6).

8. Régulateur de débit selon l'une quelconque des revendications 1 à 7, **caractérisé en ce qu'**un tamis d'entrée (12) est disposé du côté de l'entrée d'écoulement avant le régulateur de débit (1), et est saillant avec une zone centrale (13) diminuant de préférence en cône dans la direction d'arrivée d'écoulement au-dessus du contour extérieur du boitier du régulateur (1) et du joint annulaire (6).
